# EUROPEAN PATENT SPECIFICATION

(11) **EP 0 372 285 B1**
(45) Date of publication and mention of the grant of the patent: **08.06.1994**
(21) Application number: 89121425.6
(22) Date of filing: 20.11.1989
(51) Int. Cl.: G07C 9/00, E05B 49/00, B60R 25/10, G07F 7/10

(54) **Devices for the remote transmission of controls in security**
Vorrichtung zur Übertragung von Sicherheitskontrollsignalen
Dispositif pour transmettre à distance des signaux de contrôle de sécurité

(30) Priority: 06.12.1988 IT 8368688
(43) Date of publication of application: 13.06.1990
(73) Proprietor: DELTA ELETTRONICA s.p.a., I-21100 Varese (VA) (IT)
(72) Inventor: Memmola, Serafino, I-21100 Varese (IT)
(74) Representative: Ferraiolo, Ruggero

(56) References cited:
- EP-A- 0 068 805
- EP-A- 0 151 874
- EP-A- 0 257 376
- WO-A-87/07743
- DE-A- 3 211 568
- DE-A- 3 514 660
- GB-A- 2 051 442
- US-A- 4 207 555
- IBM TECHNICAL DISCLOSURE BULLETIN. vol. 27, no. 3, August 1984, New York, US, pp. 1758-1759 ; W. C. MARTIN : "Message replay prevention using a previously transmitted random number to sequence the messages".

## Description

The present invention refers to devices for the remote transmission of controls in security, in particular to an antitheft system for a vehicle controlled through radio signals.

Document EP-A-0 257 376 discloses a system for remotely controlling in security means such a lock for a vehicle. This system comprises a remote control device and a receiver device associated with means to be controlled; the remote control device comprises an encoder module, a transmitter module for transmitting encoded signals to the receiver device and a control key. The receiver device comprises a receiving module for receiving encoded signals from the remote control device and a decoding module suitable to emit a control signal after checking the code of the received encoded signal. By a first operation, for instance when assembling the system on a vehicle, the initial value of a stored binary dynamic code is determined and a random binary value is generated; these values are stored both in the encoder module in the remote control device and in the decoding module in the receiver device. The encoder module in the remote control device comprises a microcomputer programmed to perform an algorithm upon each actuation of the control key to determine each time a new dynamic code which is stored in replacement of the previous dynamic code and to transmit to the transmitter module a signal encoded according to the new dynamic code. The decoding module in the receiver device comprises a microcomputer programmed to perform, on receipt of a signal from the remote control device, the same said algorithm to obtain a new dynamic code and store this new dynamic code in a RAM, compare the code of the received encoded signal with the new dynamic code and: a) emit a control signal in case the code of the received encoded signal corresponds with the new dynamic code; b) emit no control signal in case said code and signal do not correspond.

For example the dynamic codes stored in the remote control device and the receiver device may differ when the receiver device has not received an encoded signal transmitted formerly by the remote control device. In this case the receiver device determines whether the received encoded signal corresponds to one of a plurality of codes stored in its internal memory. If a corresponding code is found, this code is used by the receiver device as new dynamic code, thereby ensuring that the dynamic codes stored respectively in the remote control device and the receiver device correspond.

The present invention as defined in independent claim 1 provides a new way to ensure in security that the dynamic code stored in the receiver device corresponds to the dynamic code stored in the remote control device.

Particular embodiments of the invention are defined by the dependent claims.

For better explaining the invention according to this description it will be described an embodiment, only as an example, referring to the enclosed drawings, in which:

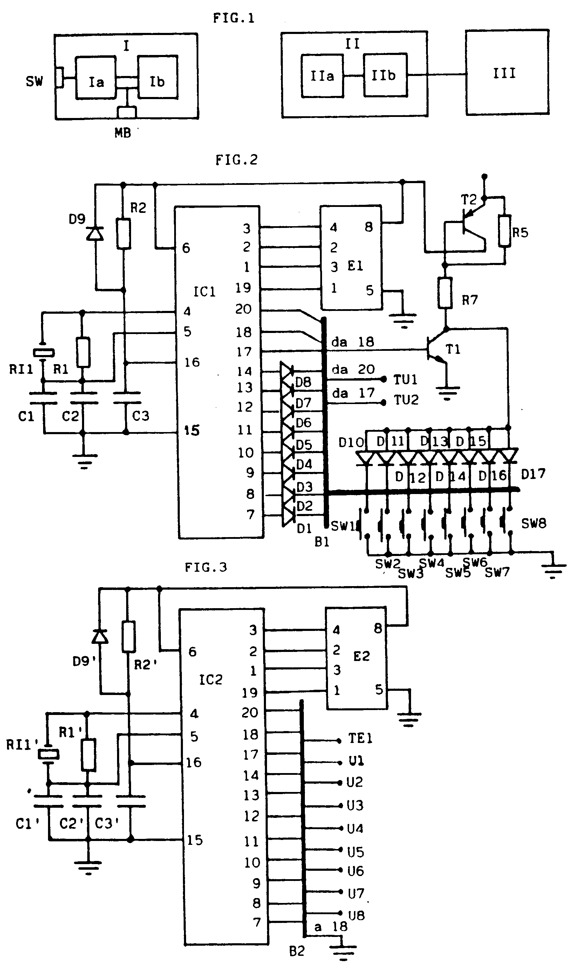

- figure 1 is a block diagram,
- figures 2, 3 are electronic diagrams.

The devices illustrated in the example refer to the remote control device of an antitheft apparatus for two motor-cars, and particularly of the functions of arming and disarming, of the antirobbery function and of the panic function of said apparatus, and of the devices of opening and closing of the gates of a house and of a factory. Said devices are constituted by a remote control device I, including an encoder module Ia, a radio transmitter module Ib, a micropile MB and a key board SW of control of eight switches SW1,SW2,SW3,SW4,SW5,SW6,SW7,SW8; and by four devices installed every one on board of each car and joined to each one of the two opening and closing members of the two gates, each of said devices including an equal radio receiver II, constituted by a receiving module IIa and a decoding module IIb, suitable to send control signals respectively to the central functioning module III of the antitheft apparatus of the two cars and of the opening and closing member of the gates. Only the encoder module Ia of the remote control device I and the decoding module IIb of the receivers II are described into details as all other modules are well known to the state of the art.

The encoder module Ia of the remote control device I is constituted essentially by the microprocessor, embodied by the integrated circuit IC1 (COP 822C Single Chip microCMOS Microcontroller of the National Semiconductor Corporation) and by a EEPROM E1 (NM 9308/COP494 256-Bit Serial Electric Erasable Programmable Memory of the National Semiconductor Corporation). Pin 6 of IC1 is connected to the positive supply, while pin 15 is connected to ground. Pins 4 and 5 of the oscillating system of IC1 are connected to the ceramic resonator RI1 of 1 MHz in parallel with the resistor R1 (1 Mo) and to the ground through capacitors C1 and C2 (100 pF).

The reset pin 16 is connected through C3 (100 pF) to ground and through the parallel of diode D9 (1N4004) and R2 (100 Ko) to the positive, pins 7,8,9,10,11,12,13,14 are connected through diodes (1N4004) D1,D2,D3,D4,D5,D6,D7,D8 and the bus B1 to the eight control keys of IC1, while pins 3 and 1 are connected respectively to pins 4 and 3 of EEPROM E1 respectively for reading and storing in E1. Pins 2 and 19 of IC1 are connected to pins 2 and 1 of E1 respectively for the clock pulses and for the selection of EEPROM, in this case not used because it is foreseen to employ only an EEPROM.

At last pins 17 and 20 are connected to TU1 and TU2, which are the output terminals of the carrier and modulation signals. Pin 18 is connected to the base of transistor T1 (NPN BC182), pilot of transistor T2 (PNP BC182); T1 is equipped with load resistors (1 Mo) of the base, and its collector is connected through R7 (27 Ko) to the base of T2 and through R5 (100 Ko) directly to the positive, the base of T2 is connected then through R7 and the diodes D10,D11,D12,D13,D14,D15,D16,D17 to the eight switches SW of the control keys, the opposite terminals of which are connected permanently to ground. The collector of T2 is connected permanently to positive supply while its collector is connected to the positive supply line of the encoder module and that is of IC1 and E1.

EEPROM E1 is equipped with three registers of eight bits for storing the base code, a register of 8 bits for storing the order of the operations foreseen by the program, according to which IC1 is masked, for the algorithm, that IC1 has to perform at the beginning, starting from the base code and subsequently from the dynamic codes for determining the following dynamic code, which is set as a sequence of an addition, a subtraction, a multiplication and the performance of the complement, while an other register of 8 bits is used for storing the coefficients of the single operations in sequence and that is the addendum which has to be added to the base code, the number which has to be subtracted from the previous sum, the factor by which the result of the previous operation has to be multiplied. Moreover E1 includes 15 series of four registers, each of 8 bits, to be employed for storing and erasing the dynamic codes.

Each decoding module IIb of the receivers is composed similarly by a Microprocessor IC2 equal to IC1 and by an EEPROM E2 equal to E1.

Pins 6,4,5,16,15,3,2,1,19 of IC2 are connected as those of IC1 to the resonator, to the positive and negative supply, to reset, to E2, while the outputs corresponding to pins 7,8,9,10,11,12,13,14 are connected through bus B2 to the controlled means in different way for each of said four means. In fact the output terminal U1,U2,U3 (pins 14,13,12) of the microprocessor of the first car, corresponding to keys SW1,SW2,SW3 are connected respectively to the imput terminal of the central functioning module of the antitheft apparatus of the first car, relating to the arming and disarming of the antitheft apparatus, to the control of the antirobbery function and to the control of the panic function of the same, and similarly the output terminal U4,U5.U6 (pins 11,10,9) of the microprocessor of the second car corresponding to the keys SW4,Sw5,SW6 are connected respectively for the similar functions to the central functioning module of the antitheft apparatus of the second car, while the output terminal U7,U8 (pins 8,7) corresponding to keys SW7,SW8 respectively of the microprocessor of the gate of the house and of that of the factory, are joined to the respective members of opening and closing of said gates.

Pin 20 is connected to input terminal TE1 of the messages coming from the receiving module.

The external components of IC2 corresponding to those of IC1 and which will be marked with the same reference numbers followed by an apostrophe, are R1′ (1 Mo), C1′ and C2′ (both 56 pF), C3′ (100 pF), R2′ (100 Ko) and D9′ (1N4148).

Upon assembling of the remote control device and of the radio receiver there are stored electrically in three special registers of EEPROM E1 and of all EPROMs E2 the base code constituted by 24 bits and that is by three words each of 8 bits, moreover in the special registers respectively the code of 4 bits of the succession of performance of the operations of the algorithm and that of the numerical coefficients of said operations.

### Functioning of the devices.

When a key is actuated, irrespective of which one, the base of T2 is grounded through R7, so T2 is excited and brings the positive then through its emitter to the whole module Ia, and moreover the pin of IC1 connected to the switch corresponding to the actuated key is brought low.

The program according to which IC1 is masked provides the emitting, further to the negative to one of the pins connected to the switches SW, of a positive pulse from pin 18, which excites T1, which at its turn mantains in conduction through its collector, which goes to ground, T2 also after the ceasing of the acting of the key previously acted and that is of the reopening of the corresponding switch SW.

Upon its supplying, IC1 reads the base code and the dynamic code, which at the beginning is nothing, and the instructions stored in E1 through the connection of its pin 3 to the pin 4 of E1, then calculates the new dynamic code and emits a series of messages encoded according to the base code and the new dynamic code and moreover according to the code of the channel and that is of the key, which has been actuated and then of the input pin of the relating pulse.

Said messages received by the receivers II are transmitted by the receiving module IIa to the decoding module IIb, and arrive to pin 20 of IC2, which is constantly supplied and which as soon as it receives the message through its pin 3 connected to pin 4 of E2, reads in E2 the base code and the dynamic code stored, which in case of the first message is nothing, and moreover the instructions for the algorithm, which it has to perform on the base code for the first message and only on the dynamic code memorized for all messages received after the first one, then compare the base code and the new dynamic code to those of the input message and if corresponding emits a control signal from the pin corresponding to the channel code.

When any key of the remote control device is actuated the relating encoded messages transmitted are received compatibly to the distance by all four receivers, and all the relating decoding modules emit after a positive checking of the base code and of the dynamic code of the detected messages a control signal from the output terminal corresponding to the actuated key or from the output terminals corresponding to the keys, which have been actuated contemporaneously, but there are controlled evidently only the central functioning modules of the means, which are connected to said output terminal.

So, for example, if the key SW3 is actuated the relating emitted encoded message will be received by all four receivers and from the output terminal U3 of every one of the relating microprocessor will be output a control signal, which will act only the panic function of the first car because only the input terminal of the functioning module of the antitheft apparatus of the first car relating to said function is connected to the output terminal U3 of the relating microprocessor, while to the output terminal of the other three microprocessors no means is connected.

In case the remote control device has been actuated carelessly or not, very far from the car and then the relating emitted message has not been received by the radio receiver or the remote control device has been changed with a spare one or in any case with another device, the base code of which is the same of that of the original device, a transmitted message will be not able to be found as corresponding by IC2 of the module IIb as far as it concerns the dynamic code; in these cases the program of IC2 provides that if the comparison of the base code is positive, IC2 erases the dynamic code stored in E2 and stores in E2 the dynamic code of the received message, without naturally controlling the central functioning module.

It follows that the operator, having had no result from the previous actuation of the remote control device, will actuate newly the remote control device and the new encoded message transmitted will have a dynamic code resulted by the operation made on the dynamic code of the previous message and stored both by E1 and as above illustrated by E2 and therefore said following message will be found by IC2 in the comparison, which it will perform, valid and then IC2 will emit a control signal from the pin corresponding to the actuated key of the remote control device.

Therefore also if a thief intercepts and stores a remote transmitted control message, it will be able to control no one of the means because the decoding modules are suitable to recognize the following messages only if their dynamic code is obtained fron the previous one on the ground of the algorithm, which can not be obtained by the thief not even with the interception of more messages.

In fact the algorithm can be also very complicated and therefore it is absolutely impossible to pick it out.

The EEPROMs have been defined according to the duration of the registers, which are averagely able to endure 10.000 registrations and relating erasures, then with those choosen in the example one can act the remote control device for several tens of years.

## Claims

1. Devices for the remote transmission of controls in security comprising a remote control device (I) including at least an encoder module (Ia), a trasmitter module (Ib) of encoded messages, a source of power (MB) and at least one control key (SW), and a receiver device (II) connected to means to be controlled including at least a receiving module (IIa) for receiving the encoded messages and a decoding module (IIb) for decoding them , suitable to emit a control signal after having checked the code of a received message, wherein:
- the encoder module (Ia) of the remote control device (I) comprises a miscroprocessor (IC1) and at least a EPROM (E1), the microprocessor (E1) being provided with a program that performs the following functions:
- when the control key (SW) of the remote control device (I) is actuated the first time:
- reading in the special register of the EPROM (E1) and storing in its internal memory a base code, expressed by a binary number and stored therein upon assembling of the remote control device (I),
- reading in the special registers of the EPROM (E1) and storing in its internal memory instructions expressed by binary numbers, stored in said registers upon assembling of the remote control device (I) and defining an algorithm to be performed by the microprocessor (IC1) on the binary number of the base code to determine therefrom a new dynamic code,
- performing said algorithm on the base code and determining the new dynamic code,
- storing the new dynamic code in the EPROM (E1),
- transmitting to the transmitter module (Ib) a message encoded according to the base code and the new dynamic code, so that said transmitter module (Ib) transmits said encoded message,
- every time the control key (SW) of the remote control device (I) is actuated after the fist time:
- performing the same functions as for the first time actuation but performing the algorithm not on the base code but on the last dynamic code stored in the EPROM (E1),
- and the decoding module (IIb) of the receiver device (II) comprises a microprocessor (IC2) and a EPROM (E2), the microprocessor (IC2) being provided with a program that performs the following functions when the receiver device (II) receives an input encoded message:
- for the first input message received :
- holding it in its internal memory,
- reading in the EPROM (E2) a base code, the same as the base code of the encoding module (Ia) of the remote control device (I) and holding it in its internal memory, the base code being stored in the EPROM (E2) upon assembling,
- reading in the EPROM (E2) and storing in its internal memory instructions relating to an algorithm, the same as those of the encoder module (Ia), to be performed by the microprocessor (IC2) on the base code already stored in its internal memory, said instructions having been stored in the EPROM (E2) upon assembling of the decoding module (IIb),
- performing said algorithm and determining so the new dynamic code and storing it in its internal memory,
- comparing the base code and the dynamic code of the input message received respectively with the base code and the dynamic code of the decoding module (IIb)
- in case of correspondence of both the base code and the dynamic code:
- emitting a control signal,
- in case of correspondence of no one of the two codes:
- emitting no control signal,
- in case of correspondence of the base code but not of the dynamic code:
- emitting no control signal,
- and erasing the dynamic code stored in the EPROM (E2) and storing in its place the dynamic code of the input message received, so that the following encoded message emitted by the remote control device (I) will have a new dynamic code calculated on the ground of of the former dynamic code stored in its EPROM (E1) that is equal to the dynamic code of the previous transmitted message, received and stored in the EPROM (E2) of the receiver device (II),
- for all messages received after the first one:
- performing the same operations as for the first message, but performing the algorithm not on the base code but on the last dynamic code stored in the EPROM (E2).

2. Devices according to claim 1 characterized in that the microprocessor is provided with a program that, before storing the new dynamic codes in the EPROM, carries out the steps of:
- checking if the last register employed for storing the previous dynamic code is working properly,
- in positive case storing the new dynamic code,
- and in negative case checking if a new register works properly,
- then in positive case storing in this register the new dynamic code,
- and in negative case checking a further new register and repeating the function until a properly working register is found, and then storing in this the new dynamic code.

3. Devices according to claim 1 or 2 characterized in that the remote control device (I) comprises two or more control keys (SW) and is suitable to control two or more means and/or one or more functions of one or more of said means, the actuation of a different key controlling a different means and/or a different function, the microprocessor (IC1) of the remote control device (I) being provided with a program that encodes every output message on the ground of the base code, the dynamic code and a code corresponding to the actuated key or keys (SW), every means being equipped with a receiver device (II) including a microprocessor programmed to perform all said functions and to emit the control signals from the ouput terminal or terminals corresponding to the code of the actuated key or keys.

4. Devices according to claim 3 characterized in that the remote control device (I) comprises a member suitable to allow the simultaneous actuation of two or more keys (SW).

## Patentansprüche

1. Vorrichtung zur Fernübertragung von Sicherheitssteuersignalen, mit einer Fernsteuereinrichtung (I) mit mindestens einem Encoder-Modul (Ia), einem Sendermodul (Ib) für kodierte Botschaften, einer Stromquelle (MB) und mindestens einer Steuertaste (SW), sowie einer mit der zu steuernden Einrichtung verbundenen Empfängereinrichtung (II) mit mindestens einem Empfangsmodul (IIA) zum Empfang der kodierten Botschaften und einem Dekodiermodul (IIW) für deren Dekodierung und für die Aussendung eines Steuersignals nach Prüfung des Codes einer empfangenen Botschaft, wobei
- der Encoder-Modul (Ia) der Fernsteuereinrichtung (Ia) der Fernsteuereinrichtung (I) einen Mikroprozessor (IC1) und mindestens ein EPROM (E1) aufweist, wobei der Mikroprozessor (IC1) mit einem Programm versehen ist, das die folgenden Funktionen durchführt:
- bei erstmaliger Betätigung der Steuertaste (SW) der Fernsteuereinrichtung (I):
- Lesen eines Basiscodes in einem Spezialregister des EPROM (E1) und Abspeichern in seinem inneren Speicher, wobei der Basiscode durch eine Binärzahl ausgedrückt ist und bei der Montage der Fernsteuereinrichtung (I) darin gespeichert wird,
- Lesen von Befehlen in einem Spezialregister des EPROM (E1) und Abspeichern in seinem inneren Speicher, wobei die Befehle durch Binärzahlen ausgedrückt sind und in den Registern bei der Montage der Fernsteuereinrichtung (I) gespeichert werden und einen Algorithmus definieren, der von dem Mikroprozessor (IC1) auf die Binärzahl des Basiscodes durchzuführen ist, um daraus einen neuen dynamischen Code zu bilden,
- Durchführung des Algorithmus auf dem Basiscode und Bestimmung des neuen, dynamischen Codes,
- Speichern des neuen dynamischen Codes in dem EPROM (E1),
- Übertragung einer Botschaft zu dem Sendermodul (Ib), die gemäß dem Basiscode und dem neuen dynamischen Code codiert ist, so daß der Sendermodul (Ib) die codierte Botschaft aussendet,
- bei jeder Betätigung der Steuertaste (SW) der Fernsteuereinrichtung (I), die nach der ersten Betätigung erfolgt:
- Durchführen der gleichen Funktionen wie bei der erstmaligen Betätigung, wobei jedoch der Algorithmus nicht mehr auf den Basiscode, sondern auf den letzten dynamischen Code, der in dem EPROM (E1) gespeichert ist, angewendet wird,
- und der Decodiermodul (IIb) der Empfängereinrichtung (II) einen Mikroprozessor (IC2) und ein EPROM (E2) aufweist, wobei der Mikroprozessor (IC2) mit einem Programm versehen ist, welches die folgenden Funktionen durchführt, wenn die Empfängereinrichtung (II) eine codierte Eingangsbotschaft empfängt:
- bei der ersten empfangenen Eingangsbotschaft:
- Halten der Botschaft in dem inneren Speicher,
- Lesen eines Basiscodes in dem EPROM (E2), der derselbe wie der Basiscode des Codiermoduls (Ia) der Fernsteuereinrichtung (I) ist und Halten des Basiscodes in dem inneren Speicher, wobei der Basiscode in dem EPROM (E2) bei Montage gespeichert wurde,
- Lesen von Instruktionen in dem EPROM (E1) und Speichern in dem inneren Speicher, wobei die Instruktionen, in gleicher Weise wie des Encoder-Moduls (Ia), sich auf einen Algorithmus beziehen, der von dem Mikroprozessor (IC2) auf den in dem inneren Speicher bereits gespeicherten Basiscode ausgeführt werden soll, wobei die Instruktionen in dem EPROM (E2) bei Montage des Decodiermoduls (IIb) gespeichert wurden,
- Durchführung des Algorithmus zur Bestimmung des neuen dynamischen Codes und Speichern des Codes in dem inneren Speicher,
- Vergleichen des Basiscodes und des dynamischen Codes der jeweils empfangenen Eingangsbotschaft mit dem Basiscode und dem dynamischen Code des Decodiermoduls (IIb),
- bei Übereinstimmung sowohl des Basiscodes als auch des dynamischen Codes: Aussendung eines Steuersignals,
- bei Übereinstimmung eines der beiden Codes:keine Aussendung eines Steuersignals,
- bei Übereinstimmung des Basiscodes aber nicht des dynamischen Codes:
keine Aussendung eines Steuersignals und Löschung des in dem EPROM (E2) gespeicherten dynamischen Codes und stattdessen Speicherung des dynamischen Codes der empfangenen Eingangsbotschaft, so daß die nächste von der Fernsteuereinrichtung (I) ausgesendete, codierte Botschaft einen neuen dynamischen Code aufweist, der auf der Basis des früheren, in dem EPROM (E1) gespeicherten dynamischen Codes berechnet ist und gleich dem dynamischen Code der zuvor übertragenen Botschaft ist, die in dem EPROM (E2) der Empfängereinrichtung (II) empfangen und gespeichert wurde,
- und für alle nach der ersten Botschaft empfangenen Botschaften:
Durchführung der gleichen Vorgänge wie bei der ersten Botschaft, jedoch Durchführung des Algorithmus nicht auf den Basiscode, sondern auf den letzten in dem EPROM (E2) gespeicherten dynamischen Code.

2. Vorrichtung nach Anspruch 1,
dadurch **gekennzeichnet**, daß der Mikroprozessor mit einem Programm versehen ist, welches vor dem Speichern des neuen dynamischen Codes in dem EPROM die folgenden Schritte ausführt:
- Prüfen, ob das letzte, zur Speicherung des vorhergehenden dynamischen Codes verwendete Register ordnungsgemäß arbeitet,
- im positiven Fall Speichern des neuen dynamischen Codes,
- und im negativen Fall: Prüfen, ob ein neues Register ordnungsgemäß arbeitet,
- dann im positiven Fall Speichern des neuen dynamischen Codes in dieses Register,
- und im negativen Fall Überprüfen eines weiteren neuen Registers und Wiederholen dieser Funktionen, bis ein ordnungsgemäß arbeitendes Register gefunden ist, und dann Speichern des neuen dynamischen Codes in dieses Register.

3. Vorrichtung nach Anspruch 1 oder 2,
dadurch **gekennzeichnet**, daß die Fernsteuereinrichtung (I) zwei oder mehr Steuertasten (SW) aufweist, und für die Steuerung von zwei oder mehr Einrichtungen und/oder einer oder mehreren Funktionen einer oder mehrerer Einrichtungen geeignet ist, wobei die Betätigung einer unterschiedlichen Taste die Steuerung einer unterschiedlichen Einrichtung und/oder einer unterschiedlichen Funktion bewirkt, wobei der Mikroprozessor (IC1) der Fernsteuereinrichtung mit einem Programm versehen ist, welches jede Ausgangsbotschaft anhand des Basiscodes, des dynamischen Codes und eines der betätigten Taste oder Tasten (SW) entsprechenden Codes codiert, wobei jede Einrichtung mit einer Empfängereinrichtung (II) versehen ist, die einen Mikroprozessor aufweist, der zur Durchführung aller genannten Funktionen programmiert ist und an dem Ausgangsanschluß oder dem Ausgangsanschlüssen das Steuersignal emittiert, welches dem Code der betätigten Taste oder Tasten entspricht.

4. Vorrichtung nach Anspruch 3,
dadurch **gekennzeichnet**, daß die Fernsteuereinrichtung (I) ein Element aufweist, welches die gleichzeitige Betätigung von zwei oder mehr Tasten (SW) ermöglicht.

## Revendications

1. Dispositifs pour la transmission à distance de commandes de sécurité comprenant un dispositif de commande à distance (I) comprenant au moins un module de code (Ia), un module transmetteur (Ib) des messages codés, une source de courant (MB) et au moins une touche de commande (SW), et un dispositif récepteur (II) connecté avec des moyens à commander comprenant au moins un module récepteur (IIa) pour recevoir les messages codés et un module de décodage (IIb) pour les décoder, conçu pour émettre un signal de commande après avoir vérifié le code d'un message reçu, où :
- le module de codage (Ia) du système de commande à distance (I) comprend un microprocesseur (IC1) et au moins un EPROM (E1), le microprocesseur (E1) étant pourvu d'un programme pour effectuer les opérations suivantes :
- lorsque la touche de commande (SW) du dispositif de commande à distance (I) est actionnée la première fois :
- lecture dans un registre spécial de l'EPROM (E1) et enregistrement dans sa mémoire interne d'un code de base, exprimé par un nombre binaire et enregistré dans celle-ci lors de l'assemblage du dispositif de commande à distance (I).
- lecture dans des registres spéciaux de l'EPROM (E1) et enregistrement dans sa mémoire interne des instructions exprimées par des nombres binaires enregistrés dans lesdits registres à l'assemblage du dispositif de commande à distance (I) et définition d'un algorithme à effectuer par le microprocesseur (IC1) sur le nombre binaire du code de base, afin de déterminer à partir de celui-ci un nouveau code dynamique,
- réalisation dudit algorithme sur le code de base et détermination d'un nouveau code dynamique,
- enregistrement du nouveau code dynamique dans l'EPROM (E1)
- transmission au module transmetteur (Ib) d'un message codé selon le code de base et le nouveau code dynamique, de sorte que ledit module transmetteur (Ib) transmet ledit message codé chaque fois que la touche de commande (SW) du dispositif de commande à distance (I) est actionnée après la première fois :
- réalisation des mêmes fonctions que pour le premier actionnement, mais en effectuant l'algorithme non pas sur le code de base mais sur le dernier code dynamique enregistré dans l'EPROM (E1);
- le module de décodage (IIb) du dispositif récepteur (II) comprenant un microprocesseur (IC2) et un EPROM (E2), le microprocesseur (IC2) étant pourvu d'un programme qui effectue les fonctions suivantes lorsque le dispositif récepteur (II) reçoit un message d'entrée codé :
- pour le premier message d'entrée reçu :
- conservation de celui-ci dans la mémoire interne,
- lecture dans l'EPROM (E2) d'un code de base, le même que le code de base du module de codage (Ia) du dispositif de commande à distance (I) et maintient dans sa mémoire interne du code de base enregistré dans l'EPROM (E2) lors de l'assemblage,
- lecture dans l'EPROM (E2) et enregistrement dans sa mémoire interne des instructions concernant un algorithme, qui sont les mêmes que celles du module de codage (Ia), à effectuer par le microprocesseur (IC2) sur le code de base déjà enregistré dans sa mémoire interne, lesdites instructions ayant été enregistrées dans l'EPROM (E2) lors de l'assemblage du module de décodage (IIb),
- réalisation dudit algorithme et donc détermination du nouveau code dynamique avec enregistrement de celui-ci dans sa mémoire interne,
- comparaison du code de base et du code dynamique du message d'entrée reçus respectivement avec le code de base et le code dynamique du module de décodage (IIb);
- dans le cas d'une correspondance du code de base et du code dynamique :
- émission d'un signal de commande,
- dans le cas d'une correspondance d'aucun des deux codes :
- émission d'un signal d'absence de commande;
- dans le cas d'une correspondance du code de base, mais pas du code dynamique :
- émission d'un signal d'absence de commande;
- et effacement du code dynamique enregistré dans l'EPROM (E2) et enregistrement à sa place du code dynamique du message d'entrée reçu, de sorte que le message codé suivant émis par le dispositif de commande à distance (I) aura un nouveau code dynamique calculé sur la base du code dynamique antérieur enregistré dans son EPROM (E1) qui est égal au code dynamique du message transmis antérieur, reçu et enregistré dans l'EPROM (E2) du dispositif récepteur (II);
- pour tous les messages reçus après le premier :
- réalisation des mêmes opérations que pour le premier message, mais en effectuant l'algorithme non pas sur le code de base, mais sur le dernier code dynamique enregistré dans l'EPROM (E2).

2. Dispositifs selon la revendication 1, caractérisés en ce que le microprocesseur est pourvu d'un programme qui avant l'enregistrement des nouveaux codes dynamiques dans l'EPROM effectue les étapes consistant à :
- vérifier si le dernier registre utilisé pour enregistrer le code dynamique précédent fonctionne correctement,
- dans le cas positif, enregistrer le nouveau code dynamique,
- et dans le cas négatif, vérifier si un nouveau registre fonctionne correctement,
- ensuite, dans le cas positif, enregistrer dans ce registre le nouveau code dynamique,
- et dans le cas négatif vérifier un autre registre nouveau et répéter la fonction jusqu'à ce qu'un registre fonctionnant correctement soit trouvé et ensuite enregistrer dans celui-ci le nouveau code dynamique.

3. Dispositifs selon la revendication 1 ou 2, caractérisés en ce que le dispositif de commande à distance (I) comprend deux touches de commande (SW) ou davantage et convient à la commande de deux moyens ou davantage et/ou d'une ou de plusieurs fonctions d'un ou de plusieurs desdits moyens, l'actionnement d'une touche différente commandant un moyen différent et/ou une fonction différente, le microprocesseur (IC1) du dispositif de commande à distance (I) étant pourvu d'un programme qui code chaque message de sortie sur la base du code de base, du code dynamique et d'un code correspondant à la touche ou aux touches actionnées (SW), chaque moyen étant équipé d'un dispositif récepteur (II) comprenant un microprocesseur programmé pour exécuter toutes lesdites fonctions et émettre les signaux de commande de la borne ou des bornes de sortie correspondant au code de la touche ou des touches actionnées.

4. Dispositifs selon la revendication 3, caractérisés en ce que le dispositif de commande à distance (I) comprend un élément adapté pour permettre l'actionnement simultané de deux touches (SW) ou davantage.
